# EUROPÄISCHE PATENTSCHRIFT

(11) **EP 4 515 323 B1**
(45) Veröffentlichungstag und Bekanntmachung des Hinweises auf die Patenterteilung: **25.03.2026**
(21) Anmeldenummer: 23720633.9
(22) Anmeldetag: 27.04.2023
(51) Int. Cl.: G02C 5/22, A45C 13/00, F16B 1/00, H01R 13/62, G02C 11/00

(54) **SCHARNIERANORDNUNG FÜR EINE BRILLE, BRILLENBÜGEL ZUR VERWENDUNG IN EINER SOLCHEN SCHARNIERANORDNUNG, UND BRILLE MIT EINER SOLCHEN SCHARNIERANORDNUNG**
HINGE ARRANGEMENT FOR A PAIR OF GLASSES, TEMPLE ARM FOR USE IN SUCH A HINGE ARRANGEMENT, AND PAIR OF GLASSES COMPRISING SUCH A HINGE ARRANGEMENT
AGENCEMENT DE CHARNIÈRE POUR UNE PAIRE DE LUNETTES, BRAS DE BRANCHE DESTINÉ À ÊTRE UTILISÉ DANS UN TEL AGENCEMENT DE CHARNIÈRE, ET PAIRE DE LUNETTES COMPRENANT UN TEL AGENCEMENT DE CHARNIÈRE

(30) Priorität: 28.04.2022 DE 102022110414
(43) Veröffentlichungstag der Anmeldung: 05.03.2025
(73) Patentinhaber: OBE GmbH & Co. KG, 75228 Ispringen (DE)
(72) Erfinder: WIENICKE, Frank, 75217 Birkenfeld (DE)
(74) Vertreter: Kordel, Mattias
(86) Internationale Anmeldenummer: PCT/EP2023/061130
(87) Internationale Veröffentlichungsnummer: WO 2023/209100

(56) Entgegenhaltungen:
- CN-U- 212 626 426
- DE-A1- 102013 202 947
- FR-A1- 3 056 307
- GB-A- 834 268
- KR-A- 20080 096 972
- US-A1- 2005 157 253
- US-A1- 2023 068 202

## Beschreibung

Die Erfindung betrifft eine Scharnieranordnung für eine Brille, und eine Brille mit einer solchen Scharnieranordnung.

Soll ein Brillenbügel beispielsweise aus ästhetischen Gründen oder um eine in dem Brillenbügel angeordnete elektrische oder elektronische Komponente zu tauschen, an einer Brille ausgewechselt werden, erfordert dies insbesondere je nach Ausgestaltung einer Scharnieranordnung der Brille mehr oder weniger Aufwand. Muss dafür beispielsweise eine Scharnierachse in Schraubenform gelöst werden, erfordert dies feinmechanische Arbeiten und einen hohen Zeitaufwand. Ein Stecksystem, bei dem zumindest ein Teil des Brillenbügels einfach abgezogen und aufgesteckt werden kann, erfordert zwar einen deutlich geringeren Aufwand, bringt aber zumeist den Nachteil mit sich, dass zusätzlich zu der ohnehin vorhandenen Sichtlinie oder Sichtkante, die sich in der Tragestellung des Brillenbügels im Bereich des Scharniers für einen äußeren Beobachter ergibt, eine weitere Sichtkante an der Schnittstelle für den Bügelwechsel hinzutritt. Dies ist ästhetisch unbefriedigend, und abhängig von der Anordnung dieser Sichtkante auch problematisch mit Blick auf ein etwaiges Einklemmen von Haaren des Trägers der Brille oder Verschmutzungen im Bereich der Schnittstelle durch Hautkontakt mit dem Träger. CN 212 626 426 U (SUOLESI SHENZHEN TECH CO LTD) ist ein relevantes Dokument aus dem Stand der Technik.

Der Erfindung liegt daher die Aufgabe zugrunde, eine Scharnieranordnung für eine Brille, und eine Brille mit einer solchen Scharnieranordnung zu schaffen, wobei die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Scharnieranordnung für eine Brille geschaffen wird. Die Scharnieranordnung weist ein Scharnierteil mit zumindest einem ersten Gelenkabschnitt auf, der eingerichtet ist, um das Scharnierteil gelenkig mit einem Mittelteil einer Brille zu verbinden. Die Scharnieranordnung weist außerdem ein mit dem Scharnierteil verbindbares - insbesondere verbundenes - Einführteil und einen Brillenbügel auf, wobei der Brillenbügel stirnseitig eine Einführaussparung aufweist. Die Einführaussparung und das Einführteil sind derart eingerichtet und aufeinander abgestimmt, dass das Einführteil in die Einführaussparung - insbesondere passgenau - eingeführt werden kann, um den Brillenbügel mit dem Scharnierteil zu verbinden. Das Einführteil weist ein erstes Verbindungselement auf, und der Brillenbügel weist im Bereich der Einführaussparung ein zweites Verbindungselement auf, wobei das erste Verbindungselement und das zweite Verbindungselement eingerichtet und aufeinander abgestimmt sind, um den Brillenbügel lösbar an dem Einführteil zu befestigen, wenn das Einführteil in die Einführaussparung eingeführt ist. Der Brillenbügel weist an einer die Einführaussparung begrenzenden Außenwandung eine stirnseitige Grenzfläche auf, die eingerichtet ist, um mit einer Gegen-Grenzfläche des Mittelteils eine Sichtkante - oder synonym Sichtlinie - zu bilden, wenn der Brillenbügel vermittelt über das Einführteil und das Scharnierteil mit dem Mittelteil der Brille verbunden und in einer Tragestellung angeordnet ist. Vorteilhaft wird auf diese Weise ein Stecksystem bereitgestellt, bei dem der Brillenbügel in einfacher Weise von dem gelenkig mit dem Mittelteil der Brille verbundenen Einführteil abgezogen werden kann; hierdurch ist es möglich, den Brillenbügel gegen einen neuen, gegebenenfalls optisch anders anmutenden oder eine funktionsfähige oder frisch elektrisch geladene elektrische oder elektronische Komponente aufweisenden Brillenbügel zu tauschen, insbesondere ohne feinmechanische Arbeiten durchführen oder viel Zeit investieren zu müssen. Indem das Einführteil in die Einführaussparung eingeführt ist, wird der Brillenbügel sicher über eine vergleichsweise lange Strecke geführt, sodass er stabil an dem Mittelteil der Brille angeordnet ist. Zugleich sorgen die miteinander zusammenwirkenden Verbindungselemente dafür, dass der Brillenbügel nicht versehentlich von dem Mittelteil gelöst wird. Mit der stirnseitigen Grenzfläche, die mit der Gegen-Grenzfläche des Mittelteils eine Sichtkante oder Sichtlinie bildet, wird vorteilhaft eine zusätzliche Sichtkante vermieden, wobei für einen äußeren Beobachter in einer Tragestellung des Brillenbügels lediglich an der Stelle eine Sichtkante zu sehen ist, an der ohnehin die durch die Scharnierfunktion notwendige Trennlinie vorhanden ist. Somit wird eine ästhetisch ansprechende und einfache Lösung bereitgestellt.

Durch die einfache Wechselmöglichkeit ist es für einen Benutzer oder Träger einer die Scharnieranordnung aufweisenden Brille insbesondere möglich, beispielsweise je nach Kontext ästhetisch passende Brillenbügel auszuwählen und damit in jeder Situation modisch angemessen zu erscheinen.

Unter einer Außenwandung wird im Kontext der vorliegenden technischen Lehre insbesondere ein in der Tragestellung an einem Träger einer die Scharnieranordnung aufweisenden Brille einem äußeren Beobachter zugewandter Wandabschnitt des Brillenbügels verstanden.

In einer Ausgestaltung ist das Scharnierteil über den ersten Gelenkabschnitt unmittelbar gelenkig mit dem Mittelteil verbindbar. In einer anderen Ausgestaltung ist das Scharnierteil über ein Zwischenstück, insbesondere ein weiteres Scharnierteil, gelenkig mit dem Mittelteil verbindbar. Dabei ist es insbesondere möglich, dass das Zwischenstück starr mit dem Mittelteil verbindbar oder verbunden ist.

Das zweite Verbindungselement ist insbesondere in der Einführaussparung oder hinter der Einführaussparung angeordnet. Insbesondere wenn das zweite Verbindungselement in der Einführaussparung angeordnet ist, wirken das an dem Einführteil angeordnete erste Verbindungselement und das zweite Verbindungselement innerhalb der Einführaussparung zusammen, wenn der Brillenbügel in einer Halteposition an dem Einführteil angeordnet ist. Insbesondere sind die Verbindungselemente dann durch die lange Führung des Einführteils in der Einführaussparung gut gegen Querkräfte gesichert, sodass ein sicherer Halt des Brillenbügels gewährleistet ist.

Insbesondere schlägt die stirnseitige Grenzfläche in der Tragestellung des Brillenbügels nicht an der Gegen-Grenzfläche an, sondern es bildet sich ein kleiner, für den Betrachter kaum wahrnehmbarer Spalt, insbesondere mit einer Spaltbreite von höchstens 1 mm, insbesondere höchstens 0,5 mm, insbesondere höchstens 0,2 mm, besondere höchstens 0,1 mm, zwischen der Grenzfläche und der Gegen-Grenzfläche. Hierdurch wird vorteilhaft insbesondere eine Überbestimmung vermieden, da ein die Tragestellung bestimmender Anschlag zwischen dem Einführteil und dem Mittelteil der Brille gegeben ist. Auf diese Weise kann eine definierte Scharnierfunktion bereitgestellt werden. Die Sichtkante der Grenzfläche mit der Gegen-Grenzfläche ist insbesondere fluchtend zu einer eigentlichen mechanischen Anschlagsfläche des Einführteils angeordnet, mit der das Einführteil in der Tragestellung an dem Mittelteil anschlägt.

Alternativ oder zusätzlich ist die Grenzfläche in der an dem Einführteil befestigten Halteposition des Brillenbügels fluchtend zu der Anschlagsfläche des Einführteils ausgerichtet.

Unter einer Tragestellung wird im Kontext der vorliegenden technischen Lehre insbesondere eine aufgestellte Stellung des Brillenbügels verstanden, in der die Brille durch einen Benutzer aufgesetzt und getragen werden kann. Der Brillenbügel ist in der Tragestellung insbesondere ungefähr 90° zu dem Mittelteil ausgerichtet. Unter einer Ruhestellung wird demgegenüber insbesondere eine eingeklappte Stellung des Brillenbügels verstanden, in der die Brille beispielsweise in einem Etui angeordnete oder anderweitig transportiert werden kann. Der Brillenbügel ist in der Ruhestellung insbesondere ungefähr parallel zu dem Mittelteil ausgerichtet.

Gemäß einer Weiterbildung der Erfindung ist vorgesehen, dass das erste Verbindungselement als äußere Umfangsfläche des Einführteils ausgebildet ist, wobei das zweite Verbindungselement als innere Umfangsfläche der Einführaussparung ausgebildet ist, wobei die äußere Umfangsfläche und die innere Umfangsfläche so aufeinander abgestimmt sind, dass das Einführteil reibschlüssig in der Einführaussparung angeordnet werden kann. Insbesondere sind somit die Einführaussparung und das Einführteil derart abgemessen, dass zwischen ihnen eine reibschlüssige Verbindung hergestellt wird, wenn der Brillenbügel auf das Einführteil aufgeschoben wird. Dies stellt eine besonders einfache und zugleich effektive Ausgestaltung der Verbindungselemente dar.

Alternativ oder zusätzlich ist vorgesehen, dass das erste Verbindungselement und das zweite Verbindungselement als korrespondierende Rastelemente ausgebildet sind. Damit kann vorteilhaft die Halteposition für den Brillenbügel an dem Einführteil definiert werden, wobei ein Benutzer außerdem fühlen kann, wenn der Brillenbügel auf dem Einführteil einrastet. Die Rastelemente sind bevorzugt so aufeinander abgestimmt, dass der Brillenbügel mit relativ geringer Kraft aus der Halteposition entfernt und abgezogen werden kann, insbesondere ohne dass eine Gefahr der Beschädigung für die Brille besteht. Zugleich wird der Brillenbügel durch die Rastelemente jedoch sicher an dem Mittelteil gehalten. In einer Ausführungsform ist eines der Verbindungselemente, ausgewählt aus dem ersten Verbindungselement und dem zweiten Verbindungselement, als mindestens ein Vorsprung ausgebildet, wobei das andere Verbindungselement, ausgewählt aus dem zweiten Verbindungselement und dem ersten Verbindungselement, als mindestens eine Aussparung oder Vertiefung ausgebildet ist, in die der Vorsprung eingreifen kann. Insbesondere ist in einer Ausführungsform das erste Verbindungselement als mindestens ein Vorsprung ausgebildet, wobei das zweite Verbindungselement als mindestens eine Aussparung oder Vertiefung ausgebildet ist.

In einer Ausführungsform ist es möglich, dass eines der Verbindungselemente als manuell betätigbare Rastklinke oder gefederte Raste ausgebildet ist.

Alternativ oder zusätzlich ist vorgesehen, dass das erste Verbindungselement eine erste Magnetvorrichtung aufweist, wobei das zweite Verbindungselement eine zweite Magnetvorrichtung aufweist, wobei die erste Magnetvorrichtung und die zweite Magnetvorrichtung so angeordnet und aufeinander abgestimmt sind, dass zumindest in einer - insbesondere vollständig, insbesondere bis zu einem Endanschlag - in die Einführaussparung eingeführten Funktionsstellung des Einführteils, insbesondere in der Halteposition des Brillenbügels, eine Anziehungskraft zwischen der ersten Magnetvorrichtung und der zweiten Magnetvorrichtung wirkt. Insbesondere kann auf diese Weise eine elegante, für den Benutzer besonders angenehme Befestigung des Brillenbügels erreicht werden, die zugleich leicht wieder gelöst werden kann.

Insbesondere weist die erste Magnetvorrichtung einen Dauermagneten, insbesondere einen Permanentmagneten, auf oder ist als Dauermagnet, insbesondere als Permanentmagnet, ausgebildet. Alternativ oder zusätzlich weist die zweite Magnetvorrichtung einen Dauermagneten, insbesondere einen Permanentmagneten, auf oder ist als Dauermagnet, insbesondere als Permanentmagnet, ausgebildet.

Gemäß einer Weiterbildung der Erfindung ist vorgesehen, dass die Scharnieranordnung eine elektrische Schnittstelle aufweist, wobei die elektrische Schnittstelle ein erstes Schnittstellenteil und ein zweites Schnittstellenteil aufweist, wobei das erste Schnittstellenteil mit dem zweiten Schnittstellenteil zu der elektrischen Schnittstelle verbindbar ist, wobei das erste Schnittstellenteil in oder an dem Einführteil angeordnet ist, und wobei das zweite Schnittstellenteil in der Einführaussparung des Brillenbügels angeordnet ist. Vorteilhaft wird auf diese Weise eine Möglichkeit bereitgestellt, einen Brillenbügel schnell zu tauschen, der eine elektrische oder elektronische Komponente aufweist, beispielsweise wenn die elektrische oder elektronische Komponente defekt ist, oder um einen Brillenbügel mit einem Akkumulator mit niedrigem Ladezustand durch einen Brillenbügel mit frisch geladenem Akkumulator zu ersetzen. Zugleich ist die elektrische Schnittstelle in der Einführaussparung vorteilhaft vor Umwelteinflüssen, Verschmutzungen und/oder Beschädigungen geschützt angeordnet. Ist demgegenüber beispielsweise ein Akkumulator in einem Ohrteil des Brillenbügels angeordnet, wobei das Ohrteil separat von dem Brillenbügel abgezogen werden kann, ergibt sich eine Trennstelle direkt am Ohr eines Trägers, wobei diese Position insbesondere sehr anfällig für Verschmutzungen ist. Außerdem können Haare des Trägers in die Trennstelle gelangen und eingeklemmt werden. Bei der hier vorgeschlagenen Scharnieranordnung liegt die einzige nach außen sichtbare Trennlinie demgegenüber vorteilhaft im Bereich des Scharniers damit weit entfernt von einem möglichen Haut- oder Haarkontakt mit dem Träger.

Gemäß einer Weiterbildung der Erfindung ist vorgesehen, dass zumindest ein Schnittstellenteil, ausgewählt aus dem ersten Schnittstellenteil und dem zweiten Schnittstellenteil, elektrische Kontakte aufweist, die entlang einer Einführrichtung des Einführteils in die Einführaussparung elastisch federnd gelagert sind. Dies erlaubt vorteilhaft einen Toleranzausgleich bei fortbestehendem elektrischem Kontakt, selbst wenn der Brillenbügel relativ zu dem Einführteil geringfügig verkippt oder aus der vollständig aufgesteckten Halteposition etwas herausverlagert oder versehentlich nicht vollständig in die Halteposition hineinverlagert wird.

Unter einer Einführrichtung wird im Kontext der vorliegenden technischen Lehre insbesondere eine Richtung verstanden, die sich entlang einer gedachten Verbindungsachse zwischen dem Einführteil und der Einführaussparung erstreckt, das heißt eine Richtung, entlang der der Brillenbügel auf das Einführteil aufgesteckt beziehungsweise das Einführteil in die Einführaussparung eingeführt wird.

Unter einer Umfangsrichtung wird im Kontext der vorliegenden technischen Lehre insbesondere eine Richtung verstanden, welche die Einführrichtung konzentrisch umgreift. Eine radiale Richtung steht senkrecht auf der Einführrichtung.

Gemäß einer Weiterbildung der Erfindung ist vorgesehen, dass zumindest eine Magnetvorrichtung, ausgewählt aus der ersten Magnetvorrichtung und der zweiten Magnetvorrichtung, eine elektrische Durchführung entlang einer Umfangsrichtung umgreift. Vorteilhaft kann so eine besonders platzsparende und zugleich stabile Ausgestaltung der elektrischen Schnittstelle in Kombination mit den Verbindungselementen bereitgestellt werden. Zugleich wird die elektrische Durchführung vorteilhaft durch die sie umgreifende Magnetvorrichtung geschützt.

Insbesondere umgreift die zumindest eine Magnetvorrichtung das erste Schnittstellenteil oder das zweite Schnittstellenteil entlang der Umfangsrichtung.

Alternativ ist vorgesehen, dass die zumindest eine Magnetvorrichtung, ausgewählt aus der ersten Magnetvorrichtung und der zweiten Magnetvorrichtung, parallel zu einer elektrischen Durchführung angeordnet ist. Dies erlaubt vorteilhaft eine räumliche Entkopplung zwischen der elektrischen Durchführung und den Magnetvorrichtungen.

Gemäß einer Weiterbildung der Erfindung ist vorgesehen, dass zumindest eine Magnetvorrichtung, ausgewählt aus der ersten Magnetvorrichtung und der zweiten Magnetvorrichtung, als in Umfangsrichtung geschlossener Ring ausgebildet ist. Die stellt eine besonders stabile und einfach herzustellende Form der Magnetvorrichtung dar. Außerdem erlaubt die Ausgestaltung als geschlossener Ring insbesondere vorteilhaft, dass die Magnetvorrichtung die elektrische Durchführung entlang der Umfangsrichtung umgreift.

Die zumindest eine Magnetvorrichtung ist insbesondere als kreisrunder Ring oder als ovaler Ring ausgebildet.

Insbesondere ist die zumindest eine Magnetvorrichtung, ausgewählt aus der ersten Magnetvorrichtung und der zweiten Magnetvorrichtung, in einem Metallpulver-Spritzgussverfahren hergestellt. Vorteilhaft kann die zumindest eine Magnetvorrichtung auf diese Weise sehr flexibel mit gewünschter Formgebung hergestellt werden, wobei insbesondere auch starke Permanentmagneten erhalten werden können.

Gemäß einer Weiterbildung der Erfindung ist vorgesehen, dass die erste Magnetvorrichtung und die zweite Magnetvorrichtung als sich stirnseitig anziehende Magnete ausgebildet sind. Dies stellt eine besonders einfache Ausgestaltung der Verbindungselemente dar.

Alternativ ist vorgesehen, dass eine Magnetvorrichtung, ausgewählt aus der ersten Magnetvorrichtung und der zweiten Magnetvorrichtung, als eine Außen-Magnetvorrichtung ausgebildet ist, die einen Eingriffsraum in Umfangsrichtung umgreift, in den die andere, als eine Innen-Magnetvorrichtung ausgebildete Magnetvorrichtung, ausgewählt aus der zweiten Magnetvorrichtung und der ersten Magnetvorrichtung, eingreifen kann, wobei die Außen-Magnetvorrichtung zwei verschiedene erste magnetische Pole aufweist, die entlang der Einführrichtung hintereinander angeordnet sind, wobei die Innen-Magnetvorrichtung zwei verschiedene zweite magnetische Pole aufweist, die entlang der Einführrichtung hintereinander angeordnet sind, wobei die ersten magnetischen Pole und die zweiten magnetischen Pole derart relativ zueinander orientiert sind, dass bei einer Annäherung der Innen-Magnetvorrichtung an die Außen-Magnetvorrichtung entlang der Einführrichtung eine Abstoßungskraft überwunden werden muss, um die Innen-Magnetvorrichtung in den Eingriffsraum einzuführen, und wobei die Einführaussparung und das Einführteil derart abgestimmt sind, dass die Innen-Magnetvorrichtung in den Eingriffsraum zumindest so weit eingreifen kann, dass eine Anziehungskraft zwischen den ersten magnetischen Polen und den zweiten magnetischen Polen wirkt, insbesondere wenn die Grenzfläche mit der Gegen-Grenzfläche des Mittelteils die Sichtkante bildet und/oder ein Endanschlag für den Brillenbügel an dem Einführteil erreicht ist. Aufgrund der hier spezifisch vorgeschlagenen Anordnung der ersten magnetischen Pole und der zweiten magnetischen Pole relativ zueinander ist die Verbindung sehr stabil, da die Anziehungskraft zwischen den Magnetvorrichtungen nicht bereits beim Auftreten eines kleinen Spalts zwischen dem Einführteil und dem Brillenbügel sofort abnimmt, vielmehr gegebenenfalls zunächst sogar zunimmt.

Unter zwei verschiedenen magnetischen Polen einer Magnetvorrichtung werden im Kontext der vorliegenden technischen Lehre insbesondere die beiden verschiedennamigen Pole eines Magneten verstanden, die aufgrund der Nichtexistenz magnetischer Monopole stets gemeinsam auftreten müssen. Insbesondere sind die zwei verschiedenen magnetischen Pole einer Magnetvorrichtung einerseits ein magnetischer Nordpol und andererseits ein magnetischer Südpol. Jede Magnetvorrichtung weist also zumindest einen Nordpol und zumindest einen Südpol auf. Es ist möglich, dass zumindest eine Magnetvorrichtung, ausgewählt aus der ersten Magnetvorrichtung und der zweiten Magnetvorrichtung, eine Mehrzahl solcher Polpaare aus Nordpol N und Südpol S aufweist, insbesondere eine Mehrzahl von jeweils entlang der Einführrichtung - voneinander beabstandet oder unmittelbar aufeinanderfolgend - hintereinander angeordneten Polpaaren, beispielsweise bei drei Polepaaren die Abfolge NSNSNS.

Insbesondere sind die zwei verschiedenen ersten magnetischen Pole entlang der Einführrichtung unmittelbar hintereinander angeordnet. Insbesondere sind die zwei verschiedenen zweiten magnetischen Pole entlang der Einführrichtung unmittelbar hintereinander angeordnet.

In einer Ausführungsform weist das Einführteil eine erste Anschlagfläche auf, und der Brillenbügel weist - insbesondere in der Einführaussparung - eine korrespondierende zweite Anschlagfläche auf, wobei die erste Anschlagfläche und die zweite Anschlagfläche derart angeordnet und aufeinander abgestimmt sind, dass die erste Anschlagfläche in der Halteposition an der zweiten Anschlagfläche anschlägt, wobei die beiden Anschlagflächen zugleich eine Eingreiftiefe der Innen-Magnetvorrichtung in den Eingriffsraum begrenzen. Insbesondere kann die Innen-Magnetvorrichtung nicht weiter in den Eingriffsraum eintauchen, wenn die zweite Anschlagfläche an der ersten Anschlagfläche anschlägt. Auf diese Weise wird vorteilhaft insbesondere eine definierte Lage der ersten Magnetvorrichtung und der zweiten Magnetvorrichtung relativ zueinander bereitgestellt, sodass insbesondere auch die in der Halteposition wirksame Anziehungskraft definiert ist.

Alternativ verbleibt in einer Ausführungsform im verbundenen Zustand ein Spalt zwischen der ersten Anschlagfläche und der zweiten Anschlagfläche. In diesem Fall schwebt gleichsam die Innen-Magnetvorrichtung in der Außen-Magnetvorrichtung. Dabei verbleibt in Einführrichtung ein gewisses Spiel zwischen dem Brillenbügel und dem Einführteil.

In einer Ausführungsform sind die erste Anschlagfläche und die zweite Anschlagfläche derart auf die erste Magnetvorrichtung und die zweite Magnetvorrichtung abgestimmt, dass eine erste Trennebene zwischen den ersten magnetischen Polen und eine zweite Trennebene zwischen den zweiten magnetischen Polen einen endlichen Abstand voneinander aufweisen, wenn die erste Anschlagfläche und die zweite Anschlagfläche aneinander anliegen, wobei eine Anziehungskraft zwischen den ersten magnetischen Polen und den zweiten magnetischen Polen wirkt, die die erste Anschlagfläche und die zweite Anschlagfläche gegeneinander drängt. Durch den Versatz der Trennebenen wird vorteilhaft gewährleistet, dass die Anziehungskraft auch in der Halteposition herrscht und für eine definierte und stabile Anlage der Anschlagflächen aneinander sorgt. Dabei wird den beiden Magnetvorrichtungen nicht erlaubt, ihre energetisch minimale Lage - oder gleichbedeutend eine Lage im Potentialminimum - relativ zueinander einzunehmen, vielmehr wird das Erreichen dieser Lage durch die Anlage der Anschlagflächen aneinander behindert.

Demgegenüber fluchten bei einer Ausgestaltung, bei der noch ein Spalt zwischen den Anschlagflächen besteht, die Trennebenen miteinander, und die Innen-Magnetvorrichtung schwebt kräftefrei in der Außen-Magnetvorrichtung. In diesem Fall herrscht zwar im verbundenen Zustand keine Anziehungskraft mehr zwischen den Magnetvorrichtungen, die Verbindungsteile können aber nur voneinander getrennt werden, indem die energetisch minimale Lage - oder das Potentialminimum - der Magnetvorrichtungen relativ zueinander verlassen wird, wobei im Fall einer Auslenkung der Trennebenen aus der miteinander fluchtenden Lage sofort eine Anziehungskraft wirksam wird, die einem Lösen des Brillenbügels von dem Einführteil entgegenwirkt und überwunden werden muss.

Unter einer Trennebene wird im Kontext der hier vorliegenden technischen Lehre insbesondere eine gedachte Ebene verstanden, durch die die zwei verschiedenen Pole einer Magnetvorrichtung voneinander abgeteilt sind, also insbesondere eine gedachte Ebene zwischen dem Nordpol und dem Südpol einer Magnetvorrichtung. Wenn die Trennebenen der beiden Magnetvorrichtungen miteinander fluchten, bedeutet dies somit zugleich, dass der Nordpol der ersten Magnetvorrichtung axial genau auf Höhe des Südpols der zweiten Magnetvorrichtung angeordnet ist, wobei auch der Südpol der ersten Magnetvorrichtung axial genau auf Höhe des Nordpols der zweiten Magnetvorrichtung angeordnet ist. Weisen die Trennebenen demgegenüber bei vorhandener Anziehungskraft einen Versatz zueinander auf, überlappt beispielsweise der Nordpol der ersten Magnetvorrichtung noch teilweise mit dem Nordpol der zweiten Magnetvorrichtung, sodass die energetisch minimale Lage noch nicht erreicht ist.

Gemäß einer Weiterbildung der Erfindung ist vorgesehen, dass die Einführaussparung von der Grenzfläche aus gemessen eine Tiefe aufweist, die mindestens einen Faktor 2, insbesondere höchstens 5, insbesondere mindestens 2,5, insbesondere mindestens 3, insbesondere höchstens 4,5, insbesondere höchstens 4, multipliziert mit einer in der Tragestellung des Brillenbügels in Einführrichtung gemessenen Länge des Scharnierteils beträgt. Insbesondere bei diesen Ausgestaltungen wird eine sehr stabile und sichere Führung des Brillenbügels auf dem in die Einführaussparung eingreifenden Einführteil erreicht. Bei einer Ausgestaltung, bei der das Scharnierteil einteilig mit dem Einführteil ausgebildet ist, ist die Länge des Scharnierteils die Länge desjenigen Abschnitts des einteiligen Elements, der außerhalb der Einführaussparung angeordnet ist, wenn das Einführteil vollständig in die Einführaussparung eingeführt ist.

Insbesondere weist das Einführteil eine zu der Länge der Einführaussparung korrespondierende Länge auf, sodass das Einführteil über die gesamte Länge der Einführaussparung in diese eingreifen kann. In einer Ausführungsform ist die erste Anschlagfläche an einer zuerst in die Einführaussparung eintauchenden oder der Einführaussparung zugewandten Stirnseite des Einführteils angeordnet, und die zweite Anschlagfläche ist an einem dem Einführteil zugewandten Boden der Einführaussparung angeordnet. Das Einführteil greift dann über die gesamte Länge der Einführaussparung in diese ein, wenn die erste Anschlagfläche an der zweiten Anschlagfläche anliegt.

In einer anderen Ausführungsform sind die beiden Anschlagflächen an den zugeordneten Verbindungselementen angeordnet, insbesondere die erste Anschlagfläche an dem ersten Verbindungselement und die zweite Anschlagfläche an dem zweiten Verbindungselement.

Insbesondere können die Anschlagflächen jeweils in unmittelbarer Nähe zu den ihnen zugeordneten Magnetvorrichtungen angeordnet sein. Auch in diesem Fall können die Anschlagflächen aber so angeordnet und aufeinander abgestimmt sein, dass das Einführteil über die gesamte Länge der Einführaussparung in diese eingreift, wenn die erste Anschlagfläche an der zweiten Anschlagfläche anliegt.

Gemäß einer Weiterbildung der Erfindung ist vorgesehen, dass das Scharnierteil einen zweiten Gelenkabschnitt aufweist, der eingerichtet ist, um das Scharnierteil gelenkig mit dem Einführteil zu verbinden. Auf diese Weise kann insbesondere eine für eine Kabeldurchführung durch das Scharnierteil besonders günstige Form und Kinematik bereitgestellt werden.

In einer alternativen Ausgestaltung ist das Einführteil starr mit dem Scharnierteil verbindbar oder verbunden. Insbesondere ist in einer Ausgestaltung vorgesehen, dass das Einführteil einteilig oder einstückig, insbesondere materialeinheitlich, mit dem Scharnierteil ausgebildet ist.

Gemäß einer Weiterbildung der Erfindung ist vorgesehen, dass das Scharnierteil eine Kabeldurchführungs-Aussparung aufweist. Vorteilhaft kann auf diese Weise eine Durchführung für ein Kabel zur Verbindung von in dem Brillenbügel angeordneten elektrischen oder elektronischen Komponenten mit in dem Mittelteil angeordneten elektrischen oder elektronischen Komponenten bereitgestellt werden. In einer Ausführungsform ist das Scharnierteil als Zentralteil mit Kabelführungs-Aussparung für eine Brille mit elektronischer Funktion - insbesondere als das in DE 10 2020 210 683 B3 offenbarte Zentralteil - ausgebildet.

Erfindungsgemäß weist der Brillenbügel der Scharnieranordnung eine Einführaussparung und an einer die Einführaussparung begrenzenden Außenwandung eine stirnseitige Grenzfläche auf, die eingerichtet ist, um mit einer Gegen-Grenzfläche eines Mittelteils einer Brille eine Sichtkante zu bilden, wenn der Brillenbügel mit dem Mittelteil der Brille verbunden und in einer Tragestellung angeordnet ist. In Zusammenhang mit dem Brillenbügel ergeben sich insbesondere die Vorteile, die bereits zuvor in Zusammenhang mit der Scharnieranordnung erläutert wurden.

Gemäß einer Weiterbildung der Erfindung ist vorgesehen, dass in dem Brillenbügel mindestens eine elektrische oder elektronische Komponente, insbesondere eine Batterie oder ein Akkumulator, angeordnet ist. Auf die hier vorgeschlagene Weise ist es besonders einfach und schnell möglich, den Brillenbügel und damit zugleich die elektrische oder elektronische Komponente auszuwechseln. Insbesondere wenn in dem Brillenbügel ein Akkumulator angeordnet ist, kann der Akkumulator in dem Brillenbügel geladen werden, während ein anderer Brillenbügel an der Brille getragen wird.

In einer Ausführungsform ist das zweite Schnittstellenteil als Ladeanschluss ausgebildet, um den Akkumulator laden zu können, wenn der Brillenbügel von dem Mittelteil der Brille entfernt ist.

Die Aufgabe wird schließlich auch gelöst, indem eine Brille geschaffen wird, die mindestens eine erfindungsgemäße Scharnieranordnung oder eine Scharnieranordnung nach einer oder mehreren der zuvor beschriebenen Ausführungsformen aufweist. Die Brille weist außerdem ein Mittelteil auf, wobei das Mittelteil eine Gegen-Grenzfläche aufweist, die derart angeordnet ist, dass die Gegen-Grenzfläche mit der Grenzfläche des Brillenbügels der Scharnieranordnung eine Sichtkante bildet, wenn der Brillenbügel vermittelt über das Einführteil und das Scharnierteil mit dem Mittelteil der Brille verbunden und in einer Tragestellung angeordnet ist. In Zusammenhang mit der Brille ergeben sich insbesondere die Vorteile, die bereits zuvor in Zusammenhang mit der Scharnieranordnung oder dem Brillenbügel erläutert wurden.

In einer Ausführungsform weist die Brille zwei Scharnieranordnungen auf, die jeweils ausgewählt sind aus einer Gruppe, bestehend aus einer erfindungsgemäßen Scharnieranordnung und einer Scharnieranordnung nach einer oder mehreren der zuvor beschriebenen Ausführungsformen.

Gemäß einer Weiterbildung der Erfindung ist vorgesehen, dass die Sichtkante die einzige von außen her sichtbare Trennlinie zwischen dem Mittelteil und dem Brillenbügel bildet. Darunter wird insbesondere verstanden, dass ein äußerer Betrachter bei der Betrachtung eines Trägers der die Scharnieranordnung aufweisenden Brille lediglich die Sichtkante als einzige Trennlinie zwischen dem Mittelteil und dem Brillenbügel sieht.

Gemäß einer Weiterbildung der Erfindung ist vorgesehen, dass die Brille als elektronische Datenbrille - auch als Smart Glasses bezeichnet - ausgebildet ist, wobei mindestens eine elektronische Komponente in dem Mittelteil, in dem Einführteil und/oder in dem Brillenbügel angeordnet ist. Es ist auch möglich, dass in jedem Brillenbügel von zwei Brillenbügeln der Brille jeweils eine elektrische oder elektronische Komponente angeordnet ist, die insbesondere zusammenwirken und über die jeweils zugeordneten Scharnierteile und das Mittelteil miteinander wirkverbunden sind. Insbesondere kann dabei eine Batterie, insbesondere an Akkumulator, in einem der Brillenbügel angeordnet sein, wobei in dem anderen Brillenbügel eine andere elektrische oder elektronische Komponente angeordnet ist, die von der Batterie mit elektrischer Energie versorgt wird.

In einer Ausführungsform ist eine Batterie, insbesondere ein Akkumulator, in dem Brillenbügel angeordnet, und eine - zusätzliche - elektronische Komponente ist im Mittelteil der Brille angeordnet. Insbesondere weist das Scharnierteil eine Kabeldurchführungs-Aussparung auf, um die elektronische Komponente im Mittelteil mit der Batterie in dem Brillenbügel elektrisch zu verbinden.

In einer anderen Ausführungsform ist eine elektronische Komponente in dem Einführteil angeordnet, und eine Batterie, insbesondere ein Akkumulator, im Brillenbügel, wobei insbesondere das Mittelteil frei ist von elektrischen oder elektronischen Komponenten, so dass keine Signale über das Scharnierteil geleitet werden müssen.

Ist das Mittelteil frei von einer elektrischen oder elektronischen Komponente, kann eine Datenbrille in einfacher Weise durch Austausch eines eine elektrische oder elektronische Komponente aufweisenden Brillenbügels gegen einen Brillenbügel ohne elektrische oder elektronische Komponente in eine nicht-elektronische Brille umgewandelt werden.

Die Erfindung wird im Folgenden anhand der Zeichnung näher erläutert. Dabei zeigen:
- Figur 1: eine Detaildarstellung eines Ausführungsbeispiels einer Brille mit einem Ausführungsbeispiel einer Scharnieranordnung und einem Ausführungsbeispiel eines Brillenbügels;
- Figur 2: eine Explosionsdarstellung der Scharnieranordnung gemäß Figur 1;
- Figur 3: eine Detail-Schnittdarstellung der Scharnieranordnung gemäß Figur 1, und
- Figur 4: eine schematische Darstellung der Funktionsweise der Scharnieranordnung.

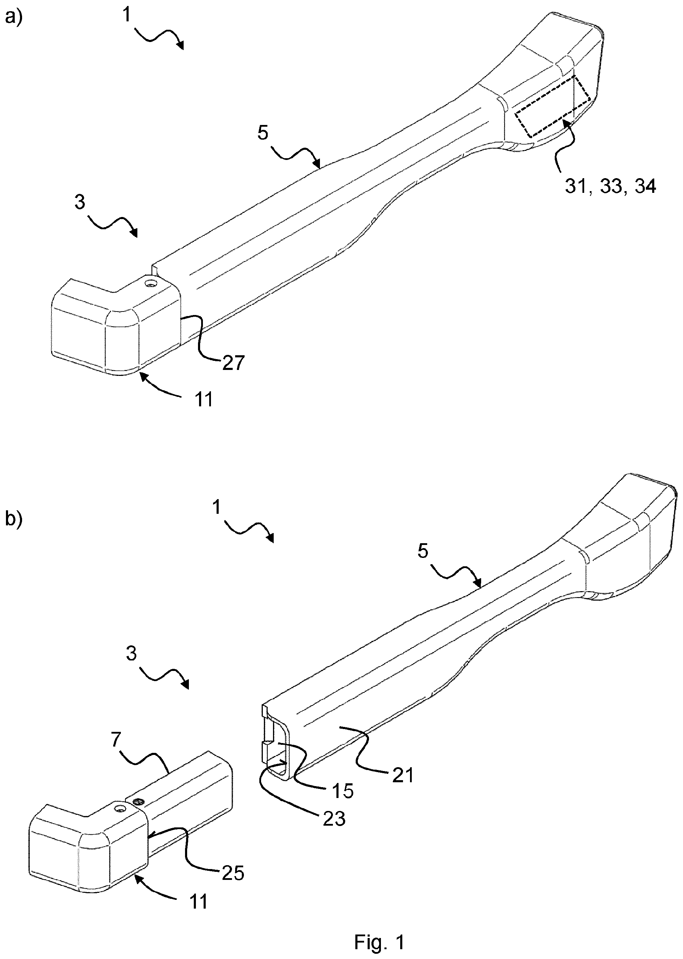

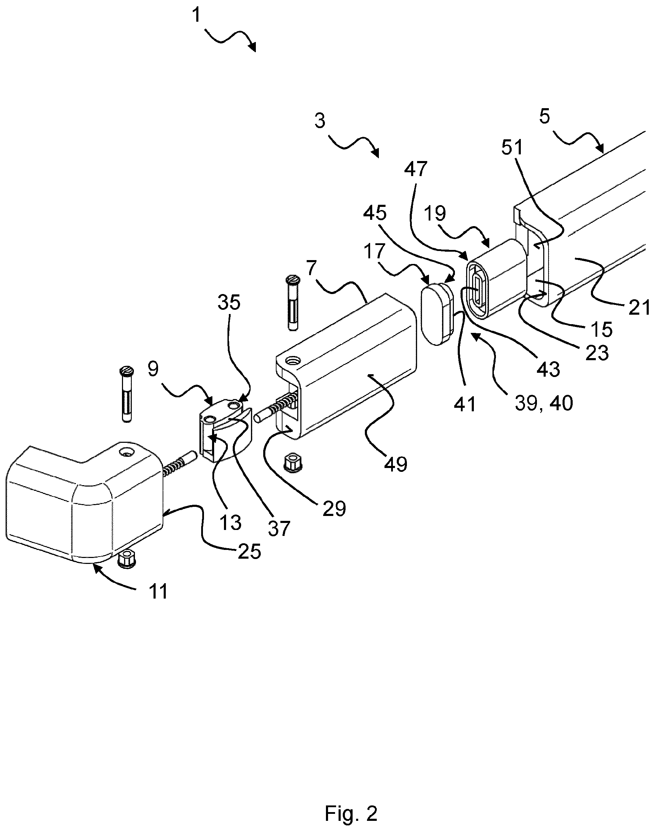

**Fig. 1** zeigt eine Detaildarstellung eines Ausführungsbeispiels einer Brille 1 mit einem Ausführungsbeispiel einer Scharnieranordnung 3 und einem Ausführungsbeispiel eines Brillenbügels 5. Bei a) ist eine Darstellung des Brillenbügels 5 in einer auf ein Einführteil 7 aufgesteckten Halteposition dargestellt, während bei b) der Brillenbügel 5 von dem Einführteil 7 abgezogen und somit zugleich von einem in Figur 2 dargestellten Scharnierteil 9 getrennt dargestellt ist. Die Brille weist ein hier nur angedeutetes Mittelteil 11 auf.

Das Scharnierteil 9 weist mit Bezug auf Figur 2 zumindest einen ersten Gelenkabschnitt 13 auf, der eingerichtet ist, um das Scharnierteil 9 gelenkig mit dem Mittelteil 11 zu verbinden. Die Scharnieranordnung 3 weist - wiederum mit Bezug auf Figur 1 - außerdem das Einführteil 7 und den Brillenbügel 5 auf, wobei der Brillenbügel 5 stirnseitig eine Einführaussparung 15 aufweist. Die Einführaussparung 15 und das Einführteil 7 sind derart eingerichtet und aufeinander abgestimmt, dass das Einführteil 7 in die Einführaussparung 15 - insbesondere passgenau - eingeführt werden kann, um den Brillenbügel 5 mit dem Scharnierteil 7 zu verbinden. Das Einführteil 7 weist - wiederum mit Bezug auf Figur 2 - ein erstes Verbindungselement 17 auf, und der Brillenbügel 5 weist im Bereich der Einführaussparung 15 ein zweites Verbindungselement 19 auf, wobei das erste Verbindungselement 17 und das zweite Verbindungselement 19 eingerichtet und aufeinander abgestimmt sind, um den Brillenbügel 5 lösbar an dem Einführteil 7 zu befestigen, wenn das Einführteil 7 in die Einführaussparung 15 eingeführt ist. Der Brillenbügel 5 weist - wiederum mit Bezug auf Figur 1 - an einer die Einführaussparung 15 begrenzenden Außenwandung 21 eine stirnseitige Grenzfläche 23 auf, die eingerichtet ist, um mit einer Gegen-Grenzfläche 25 des Mittelteils 7 eine Sichtkante 27 - oder synonym Sichtlinie - zu bilden, wenn der Brillenbügel 5 vermittelt über das Einführteil 7 und das Scharnierteil 9 mit dem Mittelteil 11 der Brille 1 verbunden und in seiner in Figur 1 bei a) dargestellten Tragestellung angeordnet ist.

Insbesondere schlägt die stirnseitige Grenzfläche 23 in der Tragestellung des Brillenbügels 5 nicht an der Gegen-Grenzfläche 25 an, sondern es bildet sich ein kleiner, für den Betrachter kaum wahrnehmbarer Spalt zwischen der Grenzfläche 23 und der Gegen-Grenzfläche 25. Die Sichtkante 27 der Grenzfläche 23 mit der Gegen-Grenzfläche 25 ist in der Tragestellung insbesondere fluchtend zu einer eigentlichen mechanischen Anschlagsfläche 29 des Einführteils 7 - siehe Figur 2 - angeordnet. Insbesondere ist die Grenzfläche 23 in der an dem Einführteil 7 befestigten Halteposition des Brillenbügels 5 fluchtend zu der Anschlagsfläche 29 des Einführteils 7 ausgerichtet, mit der das Einführteil 7 in der Tragestellung an dem Mittelteil 11, insbesondere an der Gegen-Grenzfläche 25, anschlägt.

Insbesondere ist die Sichtkante 27 die einzige von außen her sichtbare Trennlinie zwischen dem Mittelteil 11 und dem Brillenbügel 5.

Die Brille 1 ist bevorzugt als elektronische Datenbrille - auch als Smart Glasses bezeichnet - ausgebildet, wobei mindestens eine - hier nur schematisch angedeutete - elektronische Komponente 31 in dem Mittelteil 11, dem Einführteil 7 und/oder in dem Brillenbügel 5 angeordnet ist. Insbesondere ist eine Batterie 33, insbesondere ein Akkumulator 34, in dem Brillenbügel 5 angeordnet.

Die Einführaussparung 15 weist bevorzugt von der Grenzfläche 23 aus gemessen eine Tiefe auf, die mindestens einen Faktor 2, insbesondere höchstens 5, insbesondere mindestens 2,5, insbesondere mindestens 3, insbesondere höchstens 4,5, insbesondere höchstens 4, multipliziert mit einer in der Tragestellung des Brillenbügels 5 in Einführrichtung gemessenen Länge des Scharnierteils 9 beträgt.

Das Einführteil 7 weist bevorzugt eine zu der Länge der Einführaussparung 15 korrespondierende Länge auf, sodass das Einführteil 7 über die gesamte Länge der Einführaussparung 15 in diese eingreifen kann.

Fig. 2 zeigt eine Explosionsdarstellung der Scharnieranordnung 3 gemäß Figur 1.

Gleiche und funktionsgleiche Elemente sind in allen Figuren mit gleichen Bezugszeichen versehen, sodass insofern jeweils auf die vorangegangene Beschreibung verwiesen wird.

Das zweite Verbindungselement 17 ist insbesondere in der Einführaussparung 15 oder hinter der Einführaussparung 15 angeordnet.

Das Scharnierteil 9 weist bei dem hier dargestellten Ausführungsbeispiel einen zweiten Gelenkabschnitt 35 auf, der eingerichtet ist, um das Scharnierteil 9 gelenkig mit dem Einführteil 7 zu verbinden.

Insbesondere weist das Scharnierteil 9 bei dem hier dargestellten Ausführungsbeispiel eine Kabeldurchführungs-Aussparung 37 zur Durchführung eines Kabels auf, sodass es möglich ist, die in dem Brillenbügel 5 angeordnete elektrische oder elektronische Komponente 31 mit einer in dem Mittelteil 11 angeordneten elektrischen oder elektronischen Komponente elektrisch zu verbinden. Das Scharnierteil 9 ist insbesondere als Zentralteil mit der Kabeldurchführungs-Aussparung 37 für eine Brille 1 mit elektronischer Funktion - insbesondere als das in DE 10 2020 210 683 B3 offenbarte Zentralteil - ausgebildet.

Die Scharnieranordnung 3 weist insbesondere eine elektrische Schnittstelle 39 mit einem ersten Schnittstellenteil 41 und einem zweiten Schnittstellenteil 43 auf, wobei das erste Schnittstellenteil 41 mit dem zweiten Schnittstellenteil 43 zu der elektrischen Schnittstelle 39 verbindbar ist. Das erste Schnittstellenteil 41 ist insbesondere in dem Einführteil 7 angeordnet, und das zweite Schnittstellenteil 43 ist in der Einführaussparung 15 angeordnet.

Bevorzugt ist das zweite Schnittstellenteil 43 als Ladeanschluss ausgebildet, um den Akkumulator 34 laden zu können, wenn der Brillenbügel 5 von dem Mittelteil 11 der Brille 1 entfernt ist.

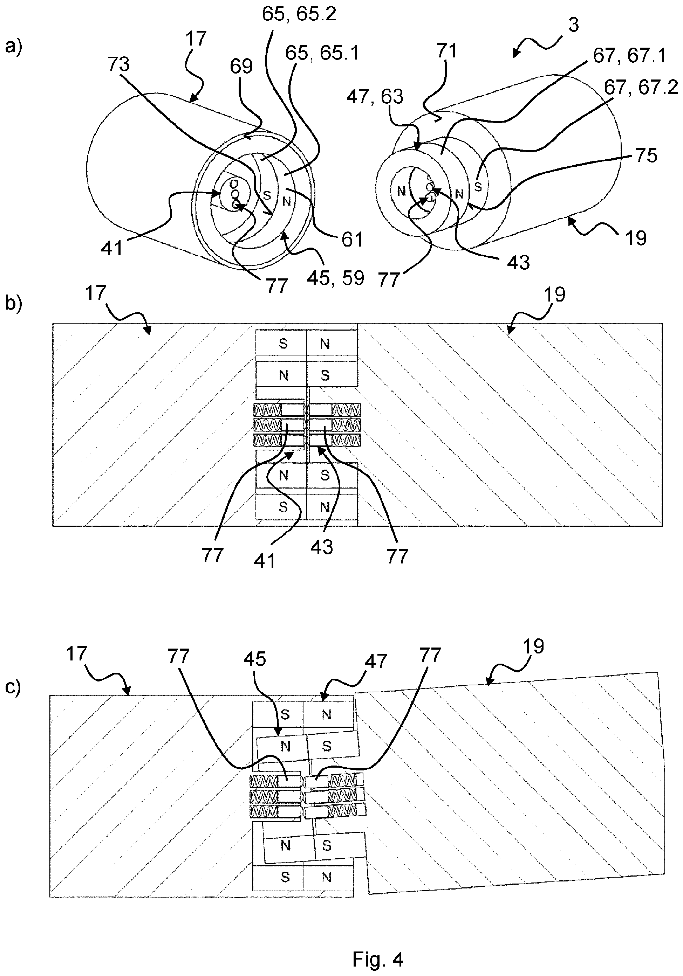

Das erste Verbindungselement 17 weist bevorzugt eine erste Magnetvorrichtung 45 auf, und das zweite Verbindungselement 19 weist eine zweite Magnetvorrichtung 47 auf, wobei die erste Magnetvorrichtung 45 und die zweite Magnetvorrichtung 47 so angeordnet und aufeinander abgestimmt sind, dass zumindest in einer in die Einführaussparung 15 eingeführten Funktionsstellung des Einführteils 7, insbesondere in der Halteposition des Brillenbügels 5, eine Anziehungskraft zwischen der ersten Magnetvorrichtung 45 und der zweiten Magnetvorrichtung 47 wirkt. Die Magnetvorrichtungen 45, 47 sind bevorzugt als Dauermagneten, insbesondere als Permanentmagneten ausgebildet. Eine bevorzugte Funktionsweise der Magnetvorrichtungen 45, 47 wird in Zusammenhang mit Figur 4 näher erläutert. Alternativ zu der dort dargestellten Funktionsweise ist es aber auch möglich, dass die erste Magnetvorrichtung 45 und die zweite Magnetvorrichtung 47 als sich stirnseitig anziehende Magnete ausgebildet sind.

Bevorzugt umgreifen die Magnetvorrichtungen 45, 47 eine elektrische Durchführung 40, insbesondere die elektrische Schnittstelle 39. Insbesondere umgreift die erste Magnetvorrichtung 45 das erste Schnittstellenteil 41 entlang einer Umfangsrichtung, und die zweite Magnetvorrichtung 47 umgreift das zweite Schnittstellenteil 43 entlang der Umfangsrichtung. Bei einem hier nicht dargestellten Ausführungsbeispiel kann alternativ vorgesehen sein, dass die Magnetvorrichtungen 45, 47 parallel zu der elektrischen Durchführung 40 angeordnet sind.

Die Magnetvorrichtungen 45, 47 sind bei dem hier dargestellten Ausführungsbeispiel ist als ovale Ringe ausgebildet.

Insbesondere ist zumindest eine Magnetvorrichtung, ausgewählt aus der ersten Magnetvorrichtung 45 und der zweiten Magnetvorrichtung 47, in einem Metallpulver-Spritzgussverfahren hergestellt.

Bei einem hier nicht dargestellten, alternativen Ausführungsbeispiel sind das erste Verbindungselement 17 und das zweite Verbindungselement 19 als korrespondierende Rastelemente ausgebildet.

Bei einem anderen hier nicht dargestellten, alternativen Ausführungsbeispiel ist das erste Verbindungselement 17 als äußere Umfangsfläche 49 des Einführteils 7 ausgebildet ist, und das zweite Verbindungselement 19 ist als innere Umfangsfläche 51 der Einführaussparung 15 ausgebildet. Die äußere Umfangsfläche 49 und die innere Umfangsfläche 51 sind dann so aufeinander abgestimmt, dass das Einführteil 7 reibschlüssig in der Einführaussparung 15 angeordnet werden kann.

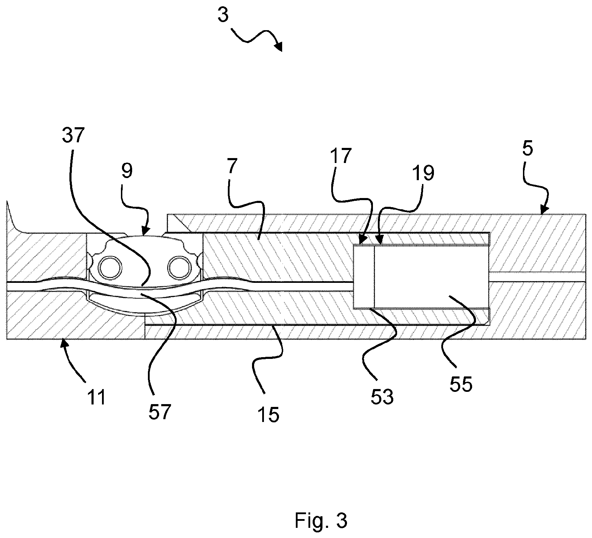

Fig. 3 zeigt eine Detail-Schnittdarstellung der Scharnieranordnung 3 gemäß Figur 1 mit dem Bügel 5 in seiner Halteposition bei in die Einführaussparung 15 eingeführtem Einführteil 7.

Das erste Schnittstellenteil 41 ist insbesondere in dem Einführteil 7 in einer Kopplungsaussparung 53 angeordnet, und das zweite Schnittstellenteil 43 ist in der Einführaussparung 15 an einem Kopplungsvorsprung 55 angeordnet.

Dargestellt ist auch die Kabeldurchführungs-Aussparung 37 mit einem darin angeordneten Kabel 57.

Fig. 4 zeigt eine schematische Darstellung der Funktionsweise der Scharnieranordnung 3, insbesondere der Magnetvorrichtungen 45, 47 der Verbindungselemente 17, 19.

Bei a) sind die Verbindungselemente 17, 19 in getrenntem Zustand dargestellt. Insbesondere sind die Magnetvorrichtungen 45, 47 hier - als zu Figur 2 alternative Ausgestaltung - als kreisrunde Ringe dargestellt.

Bei dem hier dargestellten Ausführungsbeispiel ist die erste Magnetvorrichtung 45 als eine Außen-Magnetvorrichtung 59 ausgebildet, die einen Eingriffsraum 61 in Umfangsrichtung umgreift, in den die zweite Magnetvorrichtung 47, die als eine Innen-Magnetvorrichtung 63 ausgebildet ist, eingreifen kann. Die Außen-Magnetvorrichtung 59 weist zwei verschiedene erste magnetische Pole 65, nämlich einen ersten magnetischen Nordpol 65.1 und einen ersten magnetischen Südpol 65.2 auf, die entlang der Einführrichtung hintereinander angeordnet sind. Ein magnetischer Nordpol wird hier stets auch mit N und ein magnetischer Südpol mit S bezeichnet. Die Innen-Magnetvorrichtung 63 weist zwei verschiedene zweite magnetische Pole 67 aufweist, nämlich einen zweiten magnetischen Nordpol 67.1 und einen zweiten magnetischen Südpol 67.2, die entlang der Einführrichtung hintereinander angeordnet sind. Die ersten magnetischen Pole 65 und die zweiten magnetischen Pole 67 sind derart relativ zueinander orientiert, dass bei einer Annäherung der Innen-Magnetvorrichtung 63 an die Außen-Magnetvorrichtung 59 entlang der Einführrichtung eine Abstoßungskraft überwunden werden muss, um die Innen-Magnetvorrichtung 63 in den Eingriffsraum 61 einzuführen. Die Einführaussparung 15 und das Einführteil 7 sind derart abgestimmt, dass die Innen-Magnetvorrichtung 63 in den Eingriffsraum 61 zumindest so weit eingreifen kann, dass eine Anziehungskraft zwischen den ersten magnetischen 65 Polen und den zweiten magnetischen Polen 67 wirkt.

Das erste Verbindungselement 17 weist eine erste Anschlagfläche 69 auf, und das zweite Verbindungselement 19 weist eine korrespondierende zweite Anschlagfläche 71 auf, wobei die erste Anschlagfläche 69 und die zweite Anschlagfläche 71 derart angeordnet und aufeinander abgestimmt sind, dass die erste Anschlagfläche 69 in der Halteposition an der zweiten Anschlagfläche 71 anschlägt, wobei die beiden Anschlagflächen 69, 71 zugleich eine Eingreiftiefe der Innen-Magnetvorrichtung 63 in den Eingriffsraum 61 begrenzen. Insbesondere kann die Innen-Magnetvorrichtung 63 nicht weiter in den Eingriffsraum 61 eintauchen, wenn die zweite Anschlagfläche 71 an der ersten Anschlagfläche 69 anschlägt.

Bevorzugt sind die erste Anschlagfläche 69 und die zweite Anschlagfläche 71 derart auf die erste Magnetvorrichtung 45 und die zweite Magnetvorrichtung 47 abgestimmt, dass eine erste Trennebene 73 zwischen den ersten magnetischen Polen 65 und eine zweite Trennebene 75 zwischen den zweiten magnetischen Polen 67 einen endlichen Abstand voneinander aufweisen, wenn die erste Anschlagfläche 69 und die zweite Anschlagfläche 71 aneinander anliegen, wobei eine Anziehungskraft zwischen den ersten magnetischen Polen 65 und den zweiten magnetischen Polen 67 wirkt, die die erste Anschlagfläche 69 und die zweite Anschlagfläche 71 gegeneinander drängt.

Bei b) sind die Verbindungselemente 17, 19 in verbundenem Zustand dargestellt. Insbesondere ist hier dargestellt, dass die beiden Schnittstellenteile 41, 43 elektrische Kontakte 77 aufweist, die entlang der Einführrichtung elastisch federnd gelagert sind.

Bei c) ist dargestellt, dass sowohl bezüglich der elektrischen Verbindung aufgrund der elastisch federnden Lagerung der elektrischen Kontakte 77 als auch bezüglich der magnetischen Anziehungskraft ein Toleranzbereich sowohl bezüglich einer Verkippung der beiden Verbindungsteile 17, 19 relativ zueinander als auch bezüglich einer Spaltbildung besteht. Entsprechend wirkt sich diese Toleranz vorteilhaft auch auf die Verbindung zwischen dem Brillenbügel 5 und dem Einführteil 7 aus.

## Patentansprüche

1. Scharnieranordnung (3) für eine Brille (1), mit
- einem Scharnierteil (9), das zumindest einen ersten Gelenkabschnitt (13) aufweist, der eingerichtet ist, um das Scharnierteil (9) gelenkig mit einem Mittelteil (11) einer Brille (1) zu verbinden,
- einem mit dem Scharnierteil (9) verbindbaren Einführteil (7), und mit
- einem Brillenbügel (5), der stirnseitig eine Einführaussparung (15) aufweist, wobei
- die Einführaussparung (15) und das Einführteil (7) derart eingerichtet und aufeinander abgestimmt sind, dass das Einführteil (7) in die Einführaussparung (15) eingeführt werden kann, um den Brillenbügel (5) mit dem Scharnierteil (9) zu verbinden, wobei
- das Einführteil (7) ein erstes Verbindungselement (17) und der Brillenbügel (5) im Bereich der Einführaussparung (15) ein zweites Verbindungselement (19) aufweisen, wobei das erste Verbindungselement (17) und das zweite Verbindungselement (19) eingerichtet und aufeinander abgestimmt sind, um den Brillenbügel (5) lösbar an dem Einführteil (7) zu befestigen, wenn das Einführteil (7) in die Einführaussparung (15) eingeführt ist, wobei
- der Brillenbügel (5) an einer die Einführaussparung (15) begrenzenden Außenwandung (21) eine stirnseitige Grenzfläche (23) aufweist, die eingerichtet ist, um mit einer Gegen-Grenzfläche (25) des Mittelteils (11) eine Sichtkante (27) zu bilden, wenn der Brillenbügel (5) vermittelt über das Einführteil (7) und das Scharnierteil (9) mit dem Mittelteil (11) der Brille (1) verbunden und in einer Tragestellung angeordnet ist.

2. Scharnieranordnung (3) nach Anspruch 1, wobei
- das erste Verbindungselement (17) als äußere Umfangsfläche des (49) Einführteils (7) ausgebildet ist, wobei das zweite Verbindungselement (19) als innere Umfangsfläche (51) der Einführaussparung (15) ausgebildet ist, wobei die äußere Umfangsfläche (49) und die innere Umfangsfläche (51) so aufeinander abgestimmt sind, dass das Einführteil (7) reibschlüssig in der Einführaussparung (15) angeordnet werden kann, und/oder wobei
- das erste Verbindungselement (17) und das zweite Verbindungselement (19) als korrespondierende Rastelemente ausgebildet sind, und/oder wobei
- das erste Verbindungselement (17) eine erste Magnetvorrichtung (45) aufweist, wobei das zweite Verbindungselement (19) eine zweite Magnetvorrichtung (47) aufweist, wobei die erste Magnetvorrichtung (45) und die zweite Magnetvorrichtung (47) so angeordnet und aufeinander abgestimmt sind, dass zumindest in einer - insbesondere vollständig, insbesondere bis zu einem Endanschlag - in die Einführaussparung (15) eingeführten Funktionsstellung des Einführteils (7) eine Anziehungskraft zwischen der ersten Magnetvorrichtung (45) der zweiten Magnetvorrichtung (47) wirkt.

3. Scharnieranordnung (3) nach einem der vorhergehenden Ansprüche mit einer elektrischen Schnittstelle (39), die ein erstes Schnittstellenteil (41) und ein zweites Schnittstellenteil (43) aufweist, wobei das erste Schnittstellenteil (41) mit dem zweiten Schnittstellenteil (43) zu der elektrischen Schnittstelle (39) verbindbar ist, wobei das erste Schnittstellenteil (41) in oder an dem Einführteil (7) angeordnet ist, und wobei das zweite Schnittstellenteil (43) in der Einführaussparung (15) angeordnet ist.

4. Scharnieranordnung (3) nach Anspruch 3, wobei zumindest ein Schnittstellenteil (41, 43), ausgewählt aus dem ersten Schnittstellenteil (41) und dem zweiten Schnittstellenteil (43), elektrische Kontakte (77) aufweist, die entlang einer Einführrichtung des Einführteils (7) in die Einführaussparung (15) elastisch federnd gelagert sind.

5. Scharnieranordnung (3) nach einem der vorhergehenden Ansprüche, wobei zumindest eine Magnetvorrichtung (45, 47), ausgewählt aus der ersten Magnetvorrichtung (45) und der zweiten Magnetvorrichtung (47),
- eine elektrische Durchführung (40), insbesondere das erste Schnittstellenteil (41) oder das zweite Schnittstellenteil (43), entlang einer Umfangsrichtung umgreift, oder
- parallel zu einer elektrischen Durchführung (40) angeordnet ist.

6. Scharnieranordnung (3) nach einem der vorhergehenden Ansprüche, wobei zumindest eine Magnetvorrichtung (45, 47), ausgewählt aus der ersten Magnetvorrichtung (45) und der zweiten Magnetvorrichtung (47), als in Umfangsrichtung geschlossener Ring ausgebildet, insbesondere in einem Metallpulver-Spritzgussverfahren hergestellt ist.

7. Scharnieranordnung (3) nach einem der vorhergehenden Ansprüche, wobei
- die erste Magnetvorrichtung (45) und die zweite Magnetvorrichtung (47) als sich stirnseitig anziehende Magnete ausgebildet sind, oder wobei
- eine Magnetvorrichtung (45, 47), ausgewählt aus der ersten Magnetvorrichtung (45) und der zweiten Magnetvorrichtung (47), als eine Außen-Magnetvorrichtung (59) ausgebildet ist, die einen Eingriffsraum (61) in Umfangsrichtung umgreift, in den die andere, als eine Innen-Magnetvorrichtung (63) ausgebildete Magnetvorrichtung (45, 47), ausgewählt aus der zweiten Magnetvorrichtung (47) und der ersten Magnetvorrichtung (45), eingreifen kann, wobei die Außen-Magnetvorrichtung (59) zwei verschiedene erste magnetische Pole (65) aufweist, die entlang einer Einführrichtung des Einführteils (7) in die Einführaussparung (15) hintereinander angeordnet sind, wobei die Innen-Magnetvorrichtung (63) zwei verschiedene zweite magnetische Pole (67) aufweist, die entlang der Einführrichtung hintereinander angeordnet sind, wobei die ersten magnetischen Pole (65) und die zweiten magnetischen Pole (67) derart relativ zueinander orientiert sind, dass bei einer Annäherung der Innen-Magnetvorrichtung (63) an die Außen-Magnetvorrichtung (59) entlang der Einführrichtung eine Abstoßungskraft überwunden werden muss, um die Innen-Magnetvorrichtung (63) in den Eingriffsraum (61) einzuführen, und wobei die Einführaussparung (15) und das Einführteil (7) derart abgestimmt sind, dass die Innen-Magnetvorrichtung (63) in den Eingriffsraum (61) zumindest so weit eingreifen kann, dass eine Anziehungskraft zwischen den ersten magnetischen Polen (65) und den zweiten magnetischen Polen (67) wirkt.

8. Scharnieranordnung (3) nach einem der vorhergehenden Ansprüche, wobei die Einführaussparung (15) von der Grenzfläche (23) aus gemessen eine Tiefe aufweist, die mindestens einen Faktor 2, insbesondere höchstens 5, insbesondere mindestens 2,5, insbesondere mindestens 3, insbesondere höchstens 4,5, insbesondere höchstens 4, multipliziert mit einer in der Tragestellung des Brillenbügels (5) in Einführrichtung des Einführteils (7) in die Einführaussparung (15) gemessenen Länge des Scharnierteils (9) beträgt.

9. Scharnieranordnung (3) nach einem der vorhergehenden Ansprüche, wobei das Scharnierteil (9) einen zweiten Gelenkabschnitt (35) aufweist, der eingerichtet ist, um das Scharnierteil (9) gelenkig mit dem Einführteil (7) zu verbinden.

10. Scharnieranordnung (3) nach einem der vorhergehenden Ansprüche, wobei das Scharnierteil (9) eine Kabeldurchführungs-Aussparung (37) aufweist.

11. Scharnieranordnung (3) nach einem der Ansprüche 1 bis 10, wobei in dem Brillenbügel (5) mindestens eine elektrische oder elektronische Komponente (31), insbesondere eine Batterie (33) oder ein Akkumulator (34), angeordnet ist.

12. Brille (1) mit mindestens einer Scharnieranordnung (3) nach einem der Ansprüche 1 bis 10, und mit einem Mittelteil (11), wobei das Mittelteil (11) eine Gegen-Grenzfläche (25) aufweist, die derart angeordnet ist, dass die Gegen-Grenzfläche (25) mit der Grenzfläche (23) des Brillenbügels (5) eine Sichtkante (27) bildet, wenn der Brillenbügel (5) vermittelt über das Einführteil (7) und das Scharnierteil (9) mit dem Mittelteil (11) der Brille (1) verbunden und in einer Tragestellung angeordnet ist.

13. Brille (1) nach Anspruch 12, wobei die Sichtkante (27) die einzige von außen her sichtbare Trennlinie zwischen dem Mittelteil (11) und dem Brillenbügel (5) bildet.

14. Brille (1) nach einem der Ansprüche 12 oder 13, wobei die Brille (1) als elektronische Datenbrille ausgebildet ist, wobei mindestens eine elektronische Komponente (31) in dem Mittelteil (11), dem Einführteil (7) und/oder in dem Brillenbügel (5) angeordnet ist.

## Claims

1. Hinge assembly (3) for eyeglasses (1), with
- a hinge part (9) comprising at least a first joint section (13) which is configured to connect the hinge part (9) in an articulated manner to a central part (11) of eyeglasses,
- an insertion part (7) connectable to the hinge part (9), and
- an eyeglass temple (5) comprising an insertion recess (15) at the front end, wherein
- the insertion recess (15) and the insertion part (7) are configured and matched to each other in such a way that the insertion part (7) can be inserted into the insertion recess (15) in order to connect the spectacle arm (5) to the hinge part (9), wherein
- the insertion part (7) has a first connecting element (17) and the eyeglass temple (5) has a second connecting element (19) in the area of the insertion recess (15), wherein the first connecting element (17) and the second connecting element (19) are configured and matched to each other so that the eyeglass temple (5) to be detachably fastened to the insertion part (7) when the insertion part (7) is inserted into the insertion recess (15), wherein
- the eyeglass temple (5) has a front boundary surface (23) on an outer wall (21) limiting the insertion recess (15), which is configured to form a visible edge (27) with a counter boundary surface (25) of the central part (11) when the eyeglass temple (5) is connected to the central part (11) of the eyeglass (1) via the insertion part (7) and the hinge part (9) and is arranged in a wearing position.

2. Hinge assembly (3) according to claim 1, wherein
- the first connecting element (17) is formed as an outer circumferential surface of the (49) insertion part (7), wherein the second connecting element (19) is formed as an inner circumferential surface (51) of the insertion recess (15), wherein the outer circumferential surface (49) and the inner circumferential surface (51) being matched to each other in such a way that the insertion part (7) can be arranged in the insertion recess (15) friction-locked, and/or wherein
- the first connecting element (17) and the second connecting element (19) are designed as corresponding latching elements, and/or wherein
- the first connecting element (17) has a first magnetic device (45), wherein the second connecting element (19) has a second magnetic device (47), wherein the first magnetic device (45) and the second magnetic device (47) are arranged and matched to each other such that, at least in a functional position of the insertion part (7) inserted into the insertion recess (15) - in particular completely, in particular up to an end stop - an attraction force acts between the first magnetic device (45) and the second magnetic device (47).

3. Hinge assembly (3) according to one of the preceding claims, with an electrical interface (39) comprising a first interface part (41) and a second interface part (43), wherein the first interface part (41) can be connected to the second interface part (43) to form the electrical interface (39), wherein the first interface part (41) is arranged in or on the insertion part (7), and wherein the second interface part (43) is arranged in the insertion recess (15).

4. Hinge assembly (3) according to claim 3, wherein at least one interface part (41, 43), selected from the first interface part (41) and the second interface part (43), comprises electrical contacts (77) which are elastically springy mounted along an insertion direction of the insertion part (7) into the insertion recess (15).

5. Hinge assembly (3) according to one of the preceding claims, wherein at least one magnetic device (45, 47), selected from the first magnetic device (45) and the second magnetic device (47),
- encompasses an electrical feedthrough (40), in particular the first interface part (41) or the second interface part (43), along a circumferential direction, or is
- arranged parallel to an electrical feedthrough (40).

6. Hinge assembly (3) according to one of the preceding claims, wherein at least one magnetic device (45, 47), selected from the first magnetic device (45) and the second magnetic device (47), is designed as a ring closed in circumferential direction, in particular manufactured in a metal powder injection molding process.

7. Hinge assembly (3) according to one of the preceding claims, wherein
- the first magnetic device (45) and the second magnetic device (47) are designed as magnets that attract each other at their front faces, or wherein
- a magnetic device (45, 47), selected from the first magnetic device (45) and the second magnetic device (47), is designed as an outer magnetic device (59) which encompasses an engagement space (61) in the circumferential direction, into which the other magnetic device (45, 47), designed as an inner magnetic device (63), selected from the second magnetic device (47) and the first magnetic device (45) can engage, wherein the outer magnetic device (59) has two different first magnetic poles (65) arranged in series along an insertion direction of the insertion part (7) into the insertion recess (15), wherein the inner magnetic device (63) comprises two different second magnetic poles (67) which are arranged in series along the insertion direction, wherein the first magnetic poles (65) and the second magnetic poles (67) are oriented relative to each other in such a way that, when the inner magnetic device (63) approaches the outer magnetic device (59) along the insertion direction, a repulsive force must be overcome in order to insert the inner magnetic device (63) into the engagement space (61), and wherein the insertion recess (15) and the insertion part (7) are coordinated such that the inner magnetic device (63) can engage in the engagement space (61) at least to the extent that an attractive force acts between the first magnetic poles (65) and the second magnetic poles (67).

8. Hinge assembly (3) according to one of the preceding claims, wherein the insertion recess (15) has a depth measured from the boundary surface (23) that is at least a factor of 2, in particular at most 5, in particular at least 2,5, in particular at least 3, in particular at most 4,5, in particular at most 4, multiplied by a length of the hinge part (9) measured in the wearing position of the eyeglass temple (5) in the insertion direction of the insertion part (7) into the insertion recess (15).

9. Hinge assembly (3) according to any of the preceding claims, wherein the hinge part (9) comprises a second joint section (35) which is arranged to connect the hinge part (9) in an articulated manner to the insertion part (7).

10. Hinge assembly (3) according to one of the preceding claims, wherein the hinge part (9) comprises a cable passage recess (37).

11. Hinge assembly (3) according to one of claims 1 to 10, wherein at least one electrical or electronic component (31), in particular a battery (33) or an accumulator (34), is arranged in the eyeglass temple (5).

12. Eyeglasses (1) with at least one hinge assembly (3) according to one of claims 1 to 10, and with a central part (11), wherein the central part (11) has a counter boundary surface (25) which is arranged such that the counter boundary surface (25) forms a visible edge (27) with the boundary surface (23) of the eyeglass temple (5) when the eyeglass temple (5) is connected to the central part (11) of the eyeglasses (1) via the insertion part (7) and the hinge part (9) and is arranged in a wearing position.

13. Eyeglasses (1) according to claim 12, wherein the visible edge (27) forms the only dividing line visible from the outside between the central part (11) and the eyeglass temple (5).

14. Eyeglasses (1) according to one of claims 12 or 13, wherein the eyeglasses (1) are designed as electronic data eyeglasses, wherein at least one electronic component (31) is arranged in the central part (11), the insertion part (7), and/or in the eyeglass temple (5).

## Revendications

1. Agencement de charnière (3) pour une paire de lunettes (1), avec
- une partie charnière (9) qui présente au moins une première section d'articulation (13), qui est agencée pour relier la partie charnière (9) d'une manière articulée à une partie centrale (11) d'une paire de lunettes (1),
- une partie d'insertion (7) pouvant être reliée à la partie charnière (9), et avec
- une branche de lunettes (5) qui présente un évidement d'insertion (15) du côté frontal, dans lequel
- l'évidement d'insertion (15) et la partie d'insertion (7) sont agencés et adaptés l'un à l'autre d'une manière telle que la partie d'insertion (7) peut être insérée dans l'évidement d'insertion (15), pour relier la branche de lunettes (5) à la partie charnière (9), dans lequel
- la partie d'insertion (7) présente un premier élément de liaison (17) et la branche de lunettes (5) présente dans la zone de l'évidement d'insertion (15) un deuxième élément de liaison (19), dans lequel le premier élément de liaison (17) et le deuxième élément de liaison (19) sont agencés et adaptés l'un à l'autre pour fixer la branche de lunettes (5) d'une manière détachable à la partie d'insertion (7), lorsque la partie d'insertion (7) est insérée dans l'évidement d'insertion (15), dans lequel
- la branche de lunettes (5) présente à une paroi externe (21) délimitant l'évidement d'insertion (15) une surface limite frontale (23) qui est agencée pour former avec une contre-surface limite (25) de la partie centrale (11) une arête visible (27), lorsque la branche de lunettes (5) est reliée, par le biais de la partie d'insertion (7) et de la partie charnière (9), à la partie centrale (11) de la paire de lunettes (1) et est disposée dans une position d'utilisation.

2. Agencement de charnière (3) selon la revendication 1, dans lequel
- le premier élément de liaison (17) est conçu comme une surface circonférentielle externe (49) de la partie d'insertion (7), dans lequel le deuxième élément de liaison (19) est conçu comme une surface circonférentielle interne (51) de l'évidement d'insertion (15), dans lequel la surface circonférentielle externe (49) et la surface circonférentielle interne (51) sont adaptées l'une à l'autre de sorte que la partie d'insertion (7) peut être disposée par friction dans l'évidement d'insertion (15), et/ou dans lequel
- le premier élément de liaison (17) et le deuxième élément de liaison (19) sont conçus comme des éléments d'encliquetage correspondants, et/ou dans lequel
- le premier élément de liaison (17) présente un premier dispositif aimant (45), dans lequel le deuxième élément de liaison (19) présente un deuxième dispositif aimant (47), dans lequel le premier dispositif aimant (45) et le deuxième dispositif aimant (47) sont disposés et adaptés l'un à l'autre de sorte que, au moins dans une position fonctionnelle de la partie d'insertion (7) insérée dans l'évidement d'insertion (15) - en particulier intégralement, en particulier jusqu'à une butée d'extrémité - une force d'attraction agit entre le premier dispositif aimant (45) et le deuxième dispositif aimant (47).

3. Agencement de charnière (3) selon l'une des revendications précédentes avec une interface électrique (39) qui présente une première partie d'interface (41) et une deuxième partie d'interface (43), dans lequel la première partie d'interface (41) peut être reliée à la deuxième partie d'interface (43) en formant l'interface électrique (39), dans lequel la première partie d'interface (41) est disposée dans ou sur la partie d'insertion (7), et dans lequel la deuxième partie d'interface (43) est disposée dans l'évidement d'insertion (15).

4. Agencement de charnière (3) selon la revendication 3, dans lequel au moins une partie d'interface (41, 43), choisie parmi la première partie d'interface (41) et la deuxième partie d'interface (43), présente des contacts électriques (77) qui sont logés d'une manière élastique le long d'un sens d'insertion de la partie d'insertion (7) dans l'évidement d'insertion (15).

5. Agencement de charnière (3) selon l'une des revendications précédentes, dans lequel au moins un dispositif aimant (45, 47), choisi parmi le premier dispositif aimant (45) et le deuxième dispositif aimant (47),
- entoure une connexion électrique (40), plus particulièrement la première partie d'interface (41) ou la deuxième partie d'interface (43), le long d'un sens circonférentiel, ou
- est disposé parallèlement à une connexion électrique (40).

6. Agencement de charnière (3) selon l'une des revendications précédentes, dans lequel au moins un dispositif aimant (45, 47), choisi parmi le premier dispositif aimant (45) et le deuxième dispositif aimant (47), est conçu comme un anneau fermé dans le sens circonférentiel, est fabriqué plus particulièrement selon un procédé de moulage par injection de poudre métallique.

7. Agencement de charnière (3) selon l'une des revendications précédentes, dans lequel
- le premier dispositif aimant (45) et le deuxième dispositif aimant (47) sont conçus comme des aimants s'attirant du côté frontal, ou dans lequel
- un dispositif aimant (45, 47), choisi parmi le premier dispositif aimant (45) et le deuxième dispositif aimant (47), est conçu comme un dispositif aimant externe (59), qui entoure un espace d'engrènement (61) dans le sens circonférentiel, dans lequel peut engrener l'autre dispositif aimant (45, 47), conçu comme un dispositif aimant interne (63), choisi parmi le deuxième dispositif aimant (47) et le premier dispositif aimant (45), dans lequel le dispositif aimant externe (59) présente deux premiers pôles magnétiques (65) différents qui sont disposés l'un derrière l'autre le long d'un sens d'insertion de la partie d'insertion (7) dans l'évidement d'insertion (15), dans lequel le dispositif aimant interne (63) présente deux pôles magnétiques (67) différents, qui sont disposés l'un derrière l'autre le long du sens d'insertion, dans lequel les premiers pôles magnétiques (65) et les deuxièmes pôles magnétiques (67) sont orientés l'un par rapport à l'autre d'une manière telle que lors d'un rapprochement du dispositif aimant interne (63) sur le dispositif aimant externe (59) le long du sens d'insertion, une force répulsive doit être surmontée pour insérer le dispositif aimant interne (63) dans l'espace d'engrènement (61), et dans lequel l'évidement d'insertion (15) et la pièce d'insertion (7) sont adaptés d'une manière telle que le dispositif aimant interne (63) peut engrener dans l'espace d'engrènement (61) au moins jusqu'à ce qu'une force d'attraction agisse entre les premiers pôles magnétiques (65) et les deuxièmes pôles magnétiques (67).

8. Dispositif charnière (3) selon l'une des revendications précédentes, dans lequel l'évidement d'insertion (15) présente une profondeur mesurée depuis la surface limite (23), qui s'élève à au moins un facteur 2, plus particulièrement 5 au maximum, plus particulièrement au moins 2,5, plus particulièrement au moins 3, plus particulièrement 4,5 au maximum, plus particulièrement 4 au maximum, multiplié par une longueur mesurée de la partie charnière (9) dans la position d'utilisation de la branche de lunettes (5) dans le sens d'insertion de la partie d'insertion (7) dans l'évidement d'insertion (15).

9. Dispositif charnière (3) selon l'une des revendications précédentes, dans lequel la partie charnière (9) présente une deuxième section d'articulation (35) qui est agencée pour relier la partie charnière (9) d'une manière articulée à la partie d'insertion (7).

10. Dispositif charnière (3) selon l'une des revendications précédentes, dans lequel la partie charnière (9) présente un évidement de traversée de câble (37).

11. Dispositif charnière (3) selon l'une des revendications 1 à 10, dans lequel est disposé dans la branche de lunettes (5) au moins un composant électrique ou électronique (31), plus particulièrement une batterie (33) ou un accumulateur (34).

12. Paire de lunettes (1) avec au moins un dispositif charnière (3) selon l'une des revendications 1 à 10, et avec une partie centrale (11), dans laquelle la partie centrale (11) présente une contre-surface limite (25) qui est disposée d'une manière telle que la contre-surface limite (25) forme avec la surface limite (23) de la branche de lunettes (5) une arête visible (27) lorsque la branche de lunettes (5) est reliée par le biais de la partie d'insertion (7) et de la partie charnière (9), à la partie centrale (11) de la paire de lunettes (1) et est disposée dans une position d'utilisation.

13. Paire de lunettes (1) selon la revendication 12, dans laquelle l'arête visible (27) forme la seule ligne de séparation visible de l'extérieur entre la partie centrale (11) et la branche de lunettes (5).

14. Paire de lunettes (1) selon l'une des revendications 12 ou 13, dans laquelle la paire de lunettes (1) est conçue comme une paire de lunettes électronique, dans laquelle au moins un composant électronique (31) est disposé dans la partie centrale (11), la partie d'insertion (7) et/ou dans la branche de lunettes (5).
